# EUROPÄISCHE PATENTANMELDUNG

(11) **EP 1 206 004 A1**
(43) Veröffentlichungstag der Anmeldung: **15.05.2002**
(21) Anmeldenummer: 01122410.2
(22) Anmeldetag: 20.09.2001
(51) Int. Cl.: H01R 4/72, H02G 15/18

(54) **Verfahren zur Herstellung einer wiederverwendbaren Kabelverbindung sowie entsprechende Kabelverbindung und Verwendung**

(30) Priorität: 07.11.2000 DE 10055102
(71) Anmelder: ROBERT BOSCH GMBH, 70442 Stuttgart (DE)
(72) Erfinder: Scherb, Volker, 71546 Aspach (DE)

(57) **Zusammenfassung**

Für eine wiederverwendbare Kabelverbindung werden die freien Kabeladern (3) über eine Steck- beziehungsweise entsprechende Buchseneinheit (4, 5) miteinander verbunden. Die Verbindung wird mit einem wärmeschrumpfenden Isolierschlauch (6) umschrumpft.

Diese Kabelverbindung ist in kritischen Druckbereichen einsetzbar und gestattet eine einfache Wiederverwendung.

## Beschreibung

### Stand der Technik

Zur Herstellung wiederverwendbarer Kabelverbindungen, insbesondere im Hochspannungsbereich, wurden bisher die Kabelenden abgesetzt, die freien Kabeladern verlötet und überschrumpft. Nach einer Trennung mußten die Verbindungskabel erneut abgesetzt, d. h. verkürzt, verlötet und wieder überschrumpft werden.

### Vorteile der Erfindung

Mit den Maßnahmen der Erfindung ist kein Kürzen der Verbindungskabel notwendig. Nach dem Entfernen des wärmeschrumpfenden Isolierschlauches kann die Steckverbindung gelöst werden und eventuell nach Reparatur der an eines der Kabel angeschlossenen Baugruppen, eine Wiederherstellung der Verbindung auf einfache Weise erreicht werden. Ein Anstückeln und/oder Versiegeln von Kabeladern kann entfallen.

Das Verfahren nach der Erfindung ist für eine Hochspannungsverbindung in einem kritischen Druckbereich geeignet. Insbesondere in Bereichen, wo es auf höchste Zuverlässigkeit ankommt, z. B. in Satellitensystemen, ist die Erfindung einsetzbar.

Durch das Einbringen von einem wärmehärtenden Material gemäss Anspruch 2 oder 8 ist eine zuverlässige Abdichtung der Verbindung gegeben. Glimmentladungen in besonders kritischen Druckbereichen, z. B. im Paschenminimum (Zwischendruckbereich) während der Startphase eines Satelliten, werden wirksam unterdrückt.

Das wärmehärtbare Material bietet darüber hinaus einen mechanischen Schutz bei der späteren Entfernung des wärmeschrumpfenden Isolierschlauches.

Das Überschrumpfen bei einer Temperatur, die gemäss den Ansprüchen 3 oder 6 zu einem Verkleben des wärmeschrumpfenden Isolierschlauches mit den nicht abgesetzten Kabelmantelenden, beziehungsweise des dort aufgebrachten wärmehärtenden Materials, führt, fördert ebenfalls die Zuverlässigkeit der Abdichtung.

Alternativ hierzu kann der Isolierschlauch gemäss Anspruch 4 oder 9 einen Kleber enthalten oder innenseitig mit einem Kleber beschichtet sein. Dann laßt sich die Schrumpftemperatur in bisher üblichen Bereichen halten

### Zeichnung

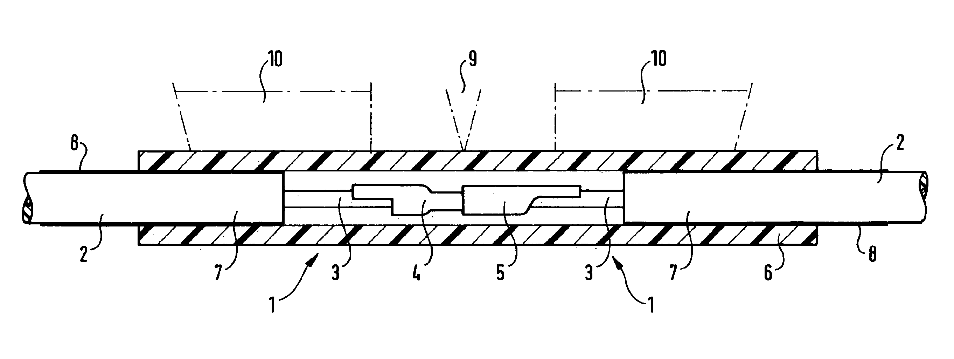

Anhand der Figur 1, die das Prinzip der erfindungsgemäßen Kabelverbindung zeigt, wird die Erfindung nun näher erläutert.

### Beschreibung von Ausführungsbeispielen

Zur Herstellung einer in Figur 1 dargestellten wiederverwendbaren Kabelverbindung werden die Kabelenden 1 der beiden zu verbindenden Kabel 2 abgesetzt. Die dadurch entstehenden freien Kabeladern 3 werden mit einer Steckeinheit 4 beziehungsweise einer der Steckeinheit entsprechenden Buchseneinheit 5 versehen. Steckeinheit 4 und Buchseneinheit 5 können insbesondere an die freien Kabeladern 3 angelötet werden. Vor dem Verbinden der freien Kabeladern 3 über die Steckverbindung, wird auf eines der Kabelenden 1 ein wärmeschrumpfender Isolierschlauch 6 aufgeschoben und dann die Steckverbindung hergestellt. Für die Steckverbindung können Hochspannungssteckeinheiten mit zugehörigen Buchseneinheiten beispielsweise der Firma Cannon verwendet werden. Anschließend wird der wärmeschrumpfende Isolierschlauch 6 in Schrumpfposition verschoben, vorzugsweise wird er dazu mittig über die Steckverbindung geschoben. Die Länge des wärmeschrumpfenden Isolierschlauches 6 wird so gewählt, dass er die Steckverbindung, die freien Kabeladern 3 sowie die nicht abgesetzten Kabelmantelenden 7 in Schrumpfposition umschließt. Daraufhin wird der wärmeschrumpfende Isolierschlauch 6 erwärmt, so dass alle von ihm umschlossenen Einheiten vollständig umschrumpft sind.

In einer vorteilhaften Ausgestaltung der Erfindung wird vor dem Überschrumpfen ein wärmehärtendes Material 8 auf die nicht abgesetzten Kabelmantelenden 7 aufgebracht. Besonders wenn der Kabelmantel aus weichem Material besteht, oder wenn die Oberfläche uneben ist, z. B. bei gewickelten Isolierungen, kann dadurch die Dichtheit der Kabelverbindung erhöht werden. Vorzugsweise wird ein Duroplast als wärmehärtendes Material 8 verwendet, z. B. Epoxidharz, mit dem die Kabelmantelenden 7 bestrichen werden. Das wärmehärtende Material 8 wirkt bei der Erwärmung als Kleber und gleicht Unebenheiten aus, da eine glatte Oberfläche für die spätere Abdichtung sehr entscheidend ist. Weiterhin bietet das wärmehärtende Material 8 einen mechanischen Schutz für die spätere Entfernung des Isolierschlauches 6.

Die Schrumpftemperatur wird vorzugsweise so gewählt, dass der wärmeschrumpfende Isolierschlauch 6 mit den nicht abgesetzten Kabelmantelenden 7 beziehungsweise dem dort zuvor aufgebrachten wärmehärtenden Material 8 verkleben kann. Bei Verwendung eines flexiblen wärmeschrumpfenden Isolierschlauches 6 auf Polyolefinbasis beträgt diese Schrumpftemperatur dann mehr als das Zweifache der normalerweise üblichen Schrumpftemperatur (> 150° C). Die maximal zulässigen Temperaturen für solche wärmeschrumpfenden Isolierschläuche 6 müssen natürlich beachtet werden.

Wird der Isolierschlauch 6 alternativ so ausgebildet, dass er einen Kleber enthält oder mit einem Kleber innenseitig beschichtet ist, kann die Schrumpftemperatur in üblichen Bereichen gehalten werden. Der Kleber selbst wird vorzugsweise auf Polyamidbasis gewählt.

Die Erfindung kann natürlich auch für Mehrfachverbindungen eingesetzt werden. Mehrere Kabeladern können über Steckverbindungen verbunden und überschrumpft werden.

Die Verbindung/en nach der Erfindung läßt/lassen sich einfach trennen, indem im Bereich von Steck- und Buchseneinrichtung 4, 5 (Schnittbereich 9) der überschrumpfte Isolierschlauch 6 zu etwa einem Drittel des Umfanges mit einem Skalpell oder Ähnlichem eingeschnitten wird und beide Enden auseinander gezögen werden. Die Weiterreißempfindlichkeit üblicher wärmeschrumpfender Isolierschläuche ist sehr hoch. Die Schlauchenden an den Kabeln 2 werden beseitigt, indem im Bereich der Steckbeziehungsweise Buchseneinheit 4, 5 der Isolierschlauch 6 eingeschnitten/halbiert wird (Schnittbereich 10) und mit einem Werkzeug, von Hand oder mit Heißluft abgezogen wird. Das Abziehen mit Heißluft ist insbesondere dann zweckmäßig, wenn der Isolierschlauch innenseitig mit einem Kleber beschichtet ist. Die Verbindung läßt sich später, z. B. nach Reparatur/Tausch der an einem der Kabel 2 angeschlossenen Baueinheiten wie zuvor beschrieben wieder herstellen.

Beispielsweise kann die erfindungsgemäße Verbindung eine Hochspannungsverbindung einer Wanderfeldröhre mit ihrer Leistungsversorgungseinheit für einen Satelliten darstellen, die sowohl in der Testphase vor der Endmontage des Satelliten gelöst und wieder hergestellt werden muss, als auch eventuell in der gewünschten Orbitposition. Die Maßnahmen der Erfindung stellen sicher, dass die Verbindung nicht bereits in der Startphase des Satelliten, insbesondere im kritischen Zwischendruckbereich (Paschenminimum) durch Glimmentladung geschädigt oder gar zerstört wird.

## Patentansprüche

1. Verfahren zur Herstellung einer wiederverwendbaren Kabelverbindung mit folgenden Schritten:
- Absetzen der Kabelenden (1),
- Anbringen von Steck- beziehungsweise entsprechenden Buchseneinheiten (4, 5) an den freien Kabeladern (3),
- Aufschieben eines wärmeschrumpfenden Isolierschlauches (6) über eines der Kabelenden (1),
- Verbinden der freien Kabeladern (3) über die Steckbeziehungsweise entsprechenden Buchseneinheiten (4, 5),
- Verschieben des wärmeschrumpfenden Isolierschlauches (6) über die Steckverbindung (4, 5) in Schrumpfposition,
- Erwärmen des wärmeschrumpfenden Isolierschlauches (6) derart, dass sowohl die freien Kabeladern (3) nebst Steckverbindung (4, 5) wie auch die nicht abgesetzten Kabelmantelenden (7) der miteinander verbundenen Kabel (2) vollständig umschrumpft sind.

2. Verfahren nach Anspruch 1, **dadurch gekennzeichnet, dass** auf die Kabelmantelenden (7) vor dem Überschrumpfen ein wärmehärtendes Material (8) aufgebracht wird.

3. Verfahren nach Anspruch 1 oder 2, **dadurch gekennzeichnet, dass** das Überschrumpfen bei einer Temperatur vorgenommen wird, die ermöglicht, dass der wärmeschrumpfende Isolierschlauch (6) mit den nicht abgesetzten Kabelmantelenden (7) beziehungsweise mit dem dort zuvor aufgebrachten wärmehärtenden Material (8) verkleben kann.

4. Verfahren nach Anspruch 1 oder 2, **dadurch gekennzeichnet, dass** der Isolierschlauch (6) einen Kleber enthält oder innenseitig mit einem Kleber beschichtet ist, insbesondere auf Polyamidbasis.

5. Verfahren nach einem der Ansprüche 1 bis 4, **dadurch gekennzeichnet, dass** als wärmehärtendes Material (8) ein Duroplast, z. B. Epoxidharz, gewählt wird.

6. Verfahren nach einem der Ansprüche 1 bis 5, **dadurch gekennzeichnet, dass** die Schrumpftemperatur mehr als das Zweifache der normalerweise üblichen Schrumpftemperatur gewählt wird, insbesondere wenn ein wärmeschrumpfender Isolierschlauch (6) auf Polyolefinbasis verwendet wird.

7. Wiederverwendbare Kabelverbindung mit folgenden Merkmalen:
- die Kabelenden (1) sind im Bereich der Verbindung abgesetzt,
- die freien Kabeladern (3) sind mit einer Steck- (4) beziehungsweise einer entsprechenden Buchseneinheit (5) versehen,
- die freien Kabeladern (3) sind im Steckzustand mit einem wärmeschrumpfenden Isolierschlauch (6) umschrumpft, wobei dieser wärmeschrumpfende Isolierschlauch sowohl die freien Kabeladern (3) nebst Steckverbindung (4, 5) wie auch die nicht abgesetzten Kabelmantelenden (7) der miteinander verbunden Kabel (2) umgibt.

8. Kabelverbindung nach Anspruch 7, **dadurch gekennzeichnet, dass** die nicht abgesetzten Kabelmantelenden (7) mit einem wärmehärtenden Material (8) umgeben sind.

9. Kabelverbindung nach Anspruch 7 oder 8, **dadurch gekennzeichnet, dass** der Isolierschlauch (6) einen Kleber enthält oder mit einem solchen Kleber innenseitig beschichtet ist.

10. Verwendung des Verfahrens nach einem der Ansprüche 1 bis 6 oder der Kabelverbindung nach Anspruch 7, 8 oder 9 für eine Hochspannungsverbindung, die insbesondere einem Druckbereich im Paschenminimum (Zwischendruckbereich), z. B. während der Startphase eines Satelliten, ausgesetzt ist.

11. Verwendung nach Anspruch 10 für die Verbindung einer Wanderfeldröhre mit ihrer Leistungsversorgungseinheit.
